# EUROPÄISCHE PATENTSCHRIFT

(11) **EP 1 735 475 B1**
(45) Veröffentlichungstag und Bekanntmachung des Hinweises auf die Patenterteilung: **26.12.2007**
(21) Anmeldenummer: 05714196.2
(22) Anmeldetag: 01.04.2005
(51) Int. Cl.: C22B 7/02, F23D 1/00, F23D 17/00, F27D 3/18

(54) **EINRICHTUNG UND VERFAHREN ZUM OXIDIEREN, REDUZIEREN, KALZINIEREN, SINTERN ODER SCHMELZEN VON STÄUBEN UNTER VERWENDUNG EINES DOSIERZYKLONS MIT BRENNSTOFFLANZE**
DEVICE AND METHOD FOR OXIDIZING, REDUCING, CALCINING, SINTERING, OR MELTING DUSTS USING A DOSING CYCLONE WITH A FUEL LANCE
DISPOSITIF ET PROCEDE POUR REALISER L'OXYDATION, LA REDUCTION, LA CALCINATION, LE FRITTAGE OU LA FUSION DE POUSSIERES, PAR UTILISATION D'UN CYCLONE DE DOSAGE AVEC LANCE A COMBUSTIBLE

(30) Priorität: 01.04.2004 AT 5832004
(43) Veröffentlichungstag der Anmeldung: 27.12.2006
(73) Patentinhaber: Patco Engineering GmbH, 6300 Zug (CH)
(72) Erfinder: EDLINGER, Alfred, A-6780 Bartholomäberg (AT)
(74) Vertreter: Haffner, Thomas M.
(86) Internationale Anmeldenummer: PCT/AT2005/000115
(87) Internationale Veröffentlichungsnummer: WO 2005/094153

(56) Entgegenhaltungen:
- EP-A- 0 484 302
- WO-A-01/62987
- WO-A-03/070651
- WO-A-20/04081237
- AT-B- 411 362
- DATABASE WPI Section PQ, Week 199127 Derwent Publications Ltd., London, GB; Class Q73, AN 1991-199858 XP002331075 & SU 1 605 088 A (KAZA POWER GEN RES) 7. November 1990 (1990-11-07)

## Beschreibung

Die Erfindung bezieht sich auf eine Einrichtung zum Oxidieren, Reduzieren, Kalzinieren, Sintern oder Schmelzen von Stäuben, wie z.B. Ofen- oder Stahlstäuben, Mergel- und Kalkstaubgemischen, Shredderleichtfraktionen, mineralischen Stäuben wie z.B. Glas-, Zementofen-Bypass-Stäuben, trockenen Kommunalschlämmen, Papierschlämmen oder ölhältigen Schleifstaubsuspensionen mit einem Dosierzyklon, in welchen die Stäube eingetragen werden, an welchen ein tangentialer Anschluss für den Eintrag von Trägergasen mündet, und einer an dem Dosierzyklon in axialer Richtung anschließenden Brennkammer, wobei koaxial zur Zyklonaustragsöffnung Brennstoff sowie ggf. weiteres Trägergas in die Brennkammer eingestoßen wird sowie auf ein Verfahren zum Oxidieren, Reduzieren, Kalzinieren, Sintern oder Schmelzen von Stäuben unter Verwendung einer derartigen Einrichtung.

Zum Schmelzen von feinen Feststoffen sowie ggf. von Schlämmen ist es bekannt, Brenner einzusetzen, welche mit unterschiedlichen Brennstoffen betrieben werden können. Die Feststoffe können hierbei in die Brennkammer oder einen Schmelzzyklon injiziert werden, wobei mehr oder minder aufwändige Injektoren Verwendung finden. Derartige Injektoren bzw. Systeme, bei welchen unter Verwendung von Trägergasen Feststoffe in eine Brennkammer eingestoßen werden, erfordern in aller Regel komplizierte Düsen, welche zur Einstellung einer geeigneten Vormischung in der Regel auch noch verstellbar sein müssen. Bekannte Injektoren sind in hohem Maße verschleißanfällig, wobei insbesondere bei der Verwendung von extrem abrasivem Einsatzmaterial bei bekannten Injektoren mit zunehmender Abrasion bzw. zunehmendem Verschleiß auch eine unterschiedliche Durchmischung beobachtet wird, welche zu unregelmäßigen Einschmelzergebnissen führt. Darüber hinaus werden Injektoren in aller Regel pulsierend betrieben, wodurch sich wiederum Unregelmä-ßigkeiten im Schmelzverhalten ergeben können.

Mit der WO 03/70651 wurde eine Einrichtung der eingangs genannten Art vorgeschlagen, welche sich durch extrem geringen Verschleiß auch bei Einsatz von überaus abrasivem Rohmaterial auszeichnet und mit welcher auch grobes Einsatzmaterial ohne Schwierigkeiten aufgeschmolzen werden kann. Insbesondere ist es mit einer derartigen Ausbildung gelungen, Feuerfestprobleme bei der Auskleidung der Brennkammer zu minimieren und mit einfachen Einrichtungen das Auslangen zu finden, bei welchen der Schmelzvorgang weitestgehend ohne Berührung der Schmelzen mit den Wänden der Brennkammer geführt werden kann.

Die Betriebsweise des Dosierzyklons ist in der Wirkung vergleichbar einem Windkessel, sodass ein kontinuierlicher und von Pulsationen freier Einstoß von Stäuben bzw. feinen Feststoffen in eine nachfolgende Brennkammer in einfacher Weise gewährleistet ist. Die Brennkammer selbst kann auf die für das Schmelzen der Stäube erforderlichen Temperaturen, beispielsweise Temperaturen von 1200° C bis 1650° C mittels Brennern aufgeheizt werden, wobei bei der bekannten Ausbildung koaxial zur Zyklonaustragsöffnung Brennstoff sowie ggf. weiteres Trägergas in die Brennkammer eingestoßen wird. Eine derartige koaxiale Zuführung von Brennstoffen erlaubt es, die unter einem Drall eingestoßenen Feststoffe in einem ersten Bereich mit den Brenngasen zu vermischen, worauf mit besonders rascher Temperaturübertragung in der Flamme ein rasches Aufschmelzen der feinteiligen Feststoffe ermöglicht wird, wobei die zirkulierende Drallströmung weitestgehend aufrecht erhalten werden kann. Dies hat zur Folge, dass über eine kurze axiale Länge eine relativ lange Kontaktzeit mit der Flamme gewährleistet wird, da ja die Feststoffpartikel im wesentlichen im Brennkegel längs einer Schraubenlinie einen im Vergleich zur axialen Länge relativ langen Weg zurücklegen.

Die Erfindung zielt nun darauf ab, eine Einrichtung der eingangs genannten Art dahingehend weiterzubilden, dass das Anwendungsgebiet wesentlich verbreitert wird, wobei insbesondere eine stabile und einstellbare Flamme sowie ein verbessertes Flammenbild erreicht werden soll, wobei durch Optimierung der Flammenform sowohl der Ausbrand als auch die jeweils gewünschte Umsetzung mit den Reaktanden bei hohen Temperaturen verbessert werden sollen. Durch die Optimierung der Flammenform soll es gleichzeitig gelingen, die jeweils eingestellte Temperatur zu optimieren, um auf diese Weise ein Sintern oder Schmelzen in der Gasphase sicherzustellen. Ausgehend von der eingangs genannten bekannten Einrichtung besteht die erfindungsgemäße Ausbildung hierbei im wesentlichen darin, dass für den Einstoß von flüssigen, in Flüssigkeit gelösten, in Gas suspendierten oder gasförmigen oxidierbaren Substanzen, insbesondere Brennstoffen, eine Lanze koaxial zur Austragsöffnung des Dosierzyklons im Inneren des Dosierzyklons angeordnet ist. Während bei der vorbekannten Ausführung zwar bereits ein koaxialer Ausstoß von Brennstoffen vorgeschlagen wurde, wird erfindungsgemäß die Ausbildung nun dahingehend weitergebildet, dass eine Lanze im Inneren des Dosierzyklons angeordnet ist, über welche der koaxiale Ausstoß von Brennstoffen bzw. weiteren Gasen ermöglicht wird. Eine derartige Lanze führt zur Ausbildung eines Kreisringspaltes im Bereich der Austragsöffnung des Zyklons, wobei das zu sinternde, zu oxidierende, zu reduzierende, zu kalzinierende oder zu schmelzende Material nunmehr als Mantel der Flamme ausgestoßen wird. Die diesem Material im Dosierzyklon erteilte Rotationsbewegung führt nun dazu, dass über eine entsprechend kurze axiale Länge eine größere Verweilzeit im Bereich der Flamme erzielt wird und die gewünschte Umsetzung optimiert werden kann. Gleichzeitig führt diese Ausbildung dazu, dass im Bereich der Mündung des Dosierzyklons in die Brennkammer ein entsprechend geringer Druck eingestellt werden kann, wobei die Druckabnahme der zunehmenden Rotationsgeschwindigkeit proportional ist. Durch den über die Lanze ausgestoßenen Brennstoff bzw. die weiteren Gase kann ein entsprechender Saugdruck im Bereich der Mündung erzielt werden, welcher einem Rückschlagen des Brenners in den Zyklon entgegenwirkt und insgesamt im Bereich des Zyklons ein wesentlich geringeres Druckniveau erlaubt. Eine Verringerung des Druckniveaus im Dosierzyklon hat zur Folge, dass auf aufwändige Dosiervorrichtungen für die Aufgabe des umzusetzenden staubförmigen Gutes verzichtet werden kann und dass einfache Dosierpendelklappen anstelle aufwändiger Zellradschleusen zum Einsatz gelangen können, welche sich darüber hinaus dadurch auszeichnen, dass das umzusetzende staubförmige Gut auch als Heißgut aufgegeben werden kann.

Zur Optimierung des Flammenbildes und der jeweils gewünschten Umsetzung ist mit Vorteil die Ausbildung so getroffen, dass die Lanze in axialer Richtung höhenverstellbar ist. Durch die axiale Höhenverstellung der Lanze lässt sich die Größe des verbleibenden Ringspaltes am Austritt des Dosierzyklons entsprechend variieren und gleichzeitig auch der entsprechende Saugdruck im Bereich dieses Ringspaltes den jeweiligen Bedürfnissen anpassen. Prinzipiell kann die Lanze beliebige Düsen und insbesondere auch Düsen mit Drallkörpern tragen, wobei die Verwendung einer Lanze die Möglichkeit bietet, im Bereich der Austragsöffnung des Dosierzyklons beliebige Düsen einzusetzen. Die Geometrie der Flamme kann dadurch noch weiter variiert und verbessert werden, dass die höhenverstellbare Lanze von einem in den Dosierzyklon eintauchenden unabhängig von der Lanze höhenverstellbaren Rohr umgeben ist. Auf diese Weise kann der verbleibende Ringspalt unabhängig von der jeweils für das Flammenbild günstigsten Position der Lanze eingestellt werden, wobei die Verbrennung noch dadurch verbessert werden kann, dass zwischen Dosierzyklon und Brennkammer ein Diffusor angeordnet ist, an welchen Sekundärluftdüsen münden. Gleichzeitig wird hier ein Rückschlagen der Flamme in den Zyklon verhindert, da die Strömungsgeschwindigkeit abgebaut und Druck im Diffusor aufgebaut wird. Mit Vorteil kann die Lanze mit einem Feuerfestmaterial ummantelt oder gekühlt sein.

Wie bereits erwähnt, kann insbesondere für die Heißgutaufgabe die Ausbildung so getroffen sein, dass für die Staubaufgabe wenigstens ein Fallrohr mit Pendelklappen vorgesehen ist. Eine derartige einfache Ausbildung erlaubt es bei entsprechendem Unterdruck im Dosierzyklon bzw. bei entsprechendem Gewicht der anstehenden Staubsäule auch heißes Material optimal zuzudosieren. Prinzipiell kann Brennstoff fest, insbesondere mit einem Trägergas, flüssig oder gasförmig eingebracht werden. Die höhenverstellbare Lanze kann in einer einfachen Gasdichtung in der der Austragsöffnung gegenüberliegenden Wand des Dosierzyklons geführt sein. Das Trägergas, mittels welchem dem staubförmigen Kalt- oder Heißgut die gewünschte Rotation verliehen wird, kann von Kalt- oder Heißwind oder Sauerstoff gebildet sein. Prinzipiell können auch reduzierende Gase als Trägergase eingesetzt werden, wenn in der Folge Eisenoxidstäube aus metallurgischen Verfahren reduziert werden sollen. Bei entsprechender Beschränkung der Temperatur auf Sintertemperaturen bzw. unter den Schmelzpunkt gelingt es mit der erfindungsgemäßen Einrichtung, das gewünschte Fertigprodukt weiterhin staubförmig zu halten. Insbesondere bei der Aufarbeitung von Materialien wie beispielsweise Zement-Bypass-Stäuben oder Mergel und Kalksteinstäuben gelingt es auf diese Art und Weise, unmittelbar staubförmigen Klinker bzw. Zement herzustellen, wobei der Aufwand für eine gesonderte Mahlung entfallen kann.

Prinzipiell lassen sich mit einer derartigen Einrichtung eine große Anzahl von Gas-Feststoff-Reaktionen realisieren, bei denen es auf eine große Feststoffoberfläche ankommt. Stäube mit extrem niedriger Wärmeleitfähigkeit und insbesondere mineralische Systeme wie Glas, Mergel-Kalzinat oder dgl. lassen sich mit geringem energetischen Aufwand auf Sintertemperaturen bringen oder aber im Fall von Glas einschmelzen. Insbesondere bei der Zementschlackenherstellung besteht ein wesentlicher Vorteil darin, dass Heißgut bei Temperaturen unter der Schmelztemperatur zugeführt werden kann und im nachfolgenden Staubbrenner entsprechend umgesetzt werden kann. Zu den möglichen Umsetzungen zählen unter anderem die Reduktion von eisenoxid- und schwermetalloxidhältigen Stäuben oder aber auch nur die Vorwärmung von Material für die Keramikherstellung. Die Aufarbeitung von Zement-Bypass-Stäuben ebenso wie die Verwendung trockener Kommunalschlämme und Papierschlämme sowie von Müllverbrennungsanlagenstäuben ebenso wie von metallurgischen Stäuben, wie sie in Sinteranlagen, Hochöfen, Stahlkonvertern oder Elektroöfen anfallen, lassen sich ebenso verwirklichen wie eine einfache Verbrennung von Shredderleichtfraktionen.

Mittels des überaus einfach gebauten Aggregates, welches sich bei kleinen Abmessungen durch eine hohe Durchsatzmenge auszeichnet, lassen sich auch Pyrohydrolysen ebenso wie die Eisenoxiddirektreduktion nach Art eines Flugstromreaktors durchführen. Pyrohydrolysen von Halogen- oder Schwefelverbindungen gelingen durch Zudosieren von H₂O, wobei z.B. Salzsäure aus Elektronikschrottlaugen rückgewonnen und reines Eisenoxid hergestellt werden kann. Eine Reihe von mineralischen Substanzen wie Eisenkupferstein können zur Kupfergewinnung umgesetzt werden, wobei auch die thermische Energieerzeugung in Form eines verschlackenden Staubbrenners in einem Dampfkraftwerk oder einer Müllverbrennungsanlage im Betracht zu ziehen sind.

Das erfindungsgemäße Verfahren zum Oxidieren, Reduzieren, Kalzinieren, Sintern oder Schmelzen von Stäuben mit einer Einrichtung der eingangs genannten Art ist im wesentlichen dadurch gekennzeichnet, dass der Dosierzyklon mit einem gegenüber dem Druck in der Brennstofflanze geringeren Druck betrieben wird. Mit einer derartigen Betriebsweise kann sichergestellt werden, dass auf aufwändige Dichtungen am Dosierzyklon verzichtet werden kann und dass tatsächlich mittels der Brennstofflanze eine entsprechende Ansaugung des Materials erzielt werden kann. Insbesondere im Falle der Verwendung von Heißgut können hierbei Schleusen, welche für Heißgut ungeeignet sind und relativ aufwändig sind, vermieden werden. Mit Vorteil wird daher erfindungsgemäß so vorgegangen, dass die Stäube als Heißgut aufgegeben werden.

Ebenso wie bei den bereits bekannten Einrichtungen wird mit Vorteil das Verfahren so betrieben, dass koaxial zur Mündung der Brennstofflanze und des Dosierzyklons Sekundärluft mit zur Achse der Lanze geneigter Richtung oder andere reaktive Gase in die Brennkammer eingeblasen werden, wobei derartige Sekundärluft als rotierender Mantel auf das zu behandelnde staubförmige Material auftrifft, und auf diese Weise wiederum geeignet ist, die Flammenform zu optimieren und die Reaktionszeit entsprechend zu verlängern, was dadurch begünstigt werden kann, dass die Sekundärluft im Gegendrall zur Drallrichtung des Dosierzyklons eingestoßen wird. Die Sekundärluft kann selbst je nach dem gewünschten Verwendungszweck oxidierend, reduzierend oder neutral sein und ggf. Wasserdampf enthalten, wodurch eine Pyrohydrolyse unter Abtrennung von Halogenwasserstoff gelingt.

Die in die Brennkammer eingestoßenen Stäube können aufgrund ihrer rotierenden Bewegung und der ggf. von außen aufgebrachten Sekundärluft von einer Kollision mit den Wänden der Brennkammer abgelenkt werden, sodass der Feuerfestaufwand in der Brennkammer wesentlich verringert werden kann. Die Einstellung der jeweils optimalen Strömungsgeschwindigkeiten bzw. Turbulenzen führt zu einem entsprechend hohen Stoffwärmeaustausch, wobei bei entsprechend reaktiven Gasen auch eine Optimierung der jeweiligen Umsetzung gelingt. Das jeweils gebildete Material kann in fester oder schmelzflüssiger Form aus dem Brenner ausgetragen werden, wobei das in der Brennkammer gebildete Verbrennungsgas ebenso wie das Trägergas im Dosierzyklon mit Vorteil tangential ausgetragen werden kann, um die gewünschte schraubenlinienförmige Strömung in der Brennkammer sicherzustellen. Bei der erfindungsgemäßen Einrichtung wird im Dosierzyklon der Staub im Trägergas fein und gleichmäßig dispergiert.

Shredder-Leichtfraktionen können dem Brennstoff beigemengt werden oder als Brennstoff eingesetzt werden, wobei die Lanze zusätzlichen Verbrennungssauerstoff zuführen kann und die Feststoffe wiederum über den Zyklon zudosiert werden können. Heißgase können gewünschtenfalls aus verschiedenen Zonen der Brennkammer ausgebracht werden. Die im Falle einer Schmelze sich bildende Schlacke kann entsprechend abgestochen werden, wobei auch ein Metallbad, insbesondere Eisenbad, in der Brennkammer vorgelegt werden kann, um weitere Umsetzungen zwischen Schlacke und Metallbad unter unmittelbarer Nutzung der Verbrennungswärme vornehmen zu können.

Die erfindungsgemäße Einrichtung zeichnet sich ebenso wie die vorbekannte Einrichtung auch dadurch aus, dass sie auf Injektoren verzichten kann und daher auch grobkörniges Material zusätzlich zu extrem feinkörnigem Material verarbeiten kann.

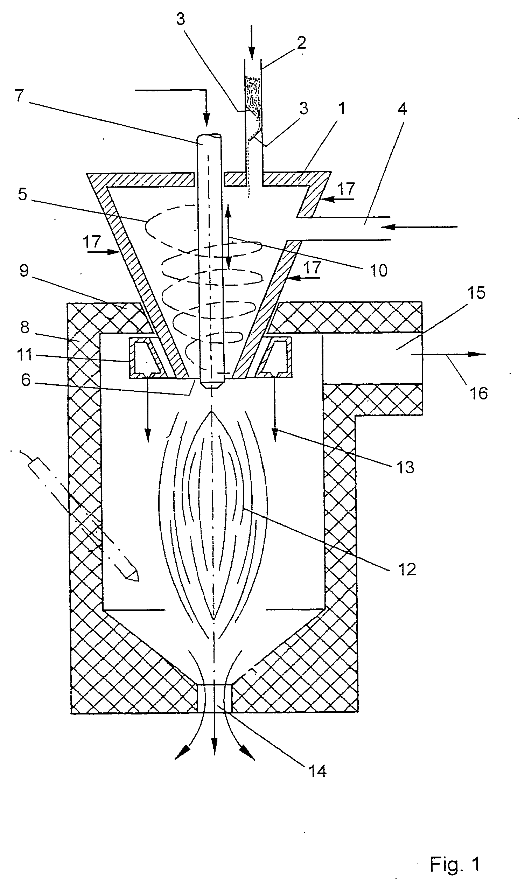

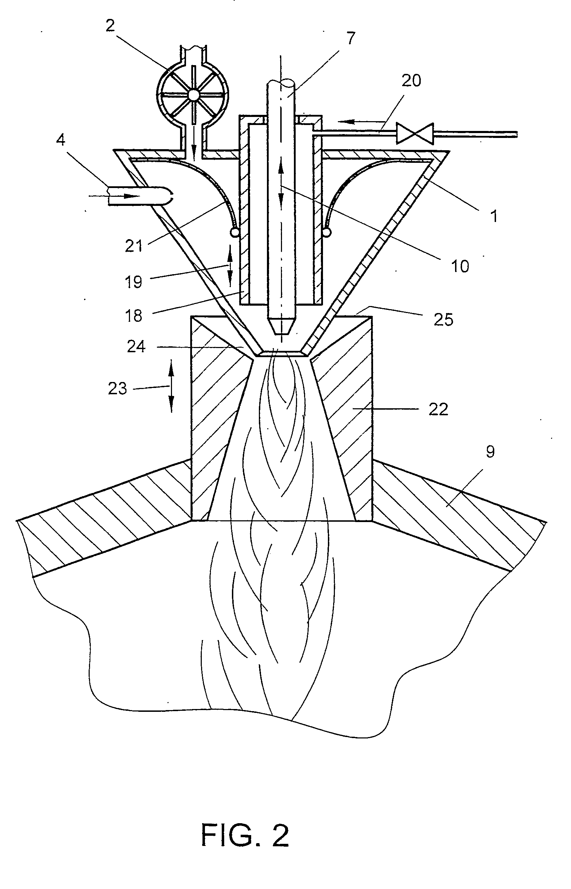

Die Erfindung wird nachfolgend anhand von in der Zeichnung schematisch dargestellten Ausführungsformen der erfindungsgemäßen Einrichtung näher erläutert, wobei Fig.1 einen Schnitt durch eine erste Ausbildung und Fig.2 ein vergrößertes Detail einer abgewandelten Brennerausgestaltung im Schnitt analog der Fig.1 zeigt.

In der Fig.1 ist mit 1 ein Dosierzyklon bezeichnet, welchem über ein Fallrohr 2 Rohmaterial aufgegeben wird. Das Rohmaterial kann entsprechend feinkörnig aufgegeben werden und besteht insbesondere aus kalten oder heißen Stäuben. Die jeweils sich ausbildende Materialsäule lastet auf Dosierpendelklappen 3, über welche das Material unter dem Eigengewicht in den Dosierzyklon 1 eingetragen wird. Über eine tangentiale Leitung 4 wird Kalt- bzw. Heißwind oder auch Sauerstoff eingebracht, welcher dem Aufgabegut die durch die strichlierte Linie 5 angedeutete schraubenlinienförmige Beschleunigung erteilt. Im Bereich der Austragsöffnung 6 des Dosierzyklons ist die Beschleunigung am höchsten, wobei der Druck entsprechend abnimmt. Um auch schlecht rieselfähiges backendes (Heiß-)Gut im Zyklon zu fluidisieren und gut förderbar zu machen können zusätzlich zur tangentialen Leitung 4 weitere Heißluft- bzw. Sauerstoffdüsen, wie schematisch mit 17 angedeutet, tangential in den Zyklon 1 münden. Die Düsen 17 können hierbei über den Umfang des Zyklons verteilt angeordnet werden, wobei beispielsweise im Falle von 3 Düsen diese jeweils einen Winkel von 120° miteinander einschließen. Über eine Lanze 7 wird fester, flüssiger oder gasförmiger Brennstoff eingebracht und im Inneren einer Brennkammer 8 gezündet. Der Dosierzyklon sitzt hierbei im Deckel 9 der Brennkammer. Die Lanze 7 kann entsprechend des Doppelpfeils 10 in Höhenrichtung verstellt werden. Je nach Position der Lanze ergibt sich ein mehr oder minder breiter ringförmiger Austrittsspalt im Bereich der Austrittsöffnung 6 des Dosierzyklons, wodurch sich zum einen die Flammenform und der jeweilige erzielbare Saugdruck verstellen lässt.

Im Inneren der Brennkammer ist ein Ringkanal 11 ersichtlich, über welchen Sekundärluft als Mantel der den Dosierzyklon in axialer Richtung verlassenden Gemische ausgestoßen wird. Der Ringkanal 11 kann auch den Dosierzyklon 1 umgebend außerhalb der Brennkammer 8 angeordnet sein, d.h. oberhalb des Deckels 9, sodass er besser vor den hohen Brennkammer-Temperaturen geschützt ist. In diesem Fall ist der Ringkanal 11 mit Düsen verbunden, die in die Brennkammer 8 münden. Dieser zusätzliche Sekundärluft- bzw. Reaktionsgasmantel dient gleichfalls der Formgebung der Flamme, welche schematisch mit 12 bezeichnet ist. Die Austrittsrichtung der Sekundärluftstrahlen wird durch die Pfeile 13 veranschaulicht, wobei diese Austrittsrichtung entsprechend auch zur Achse der Lanze geneigt verlaufen kann.

Das umgesetzte Material kann in fester oder flüssiger Form über die den Bodenauslass 14 der Brennkammer 9 abgezogen werden. Die gebildeten Verbrennungsabgase verlassen über den seitlichen Anschluss 15 die Brennkammer und werden in Richtung des Pfeils 16 tangential abgezogen.

Insgesamt ergibt sich durch die Optimierung der Flammenform eine Verbesserung der Vermischung der Gase sowohl mit dem Brennstoff als auch mit dem umzusetzenden Gut, wobei bei entsprechender Temperaturführung auch unmittelbar staubförmiges gesintertes Material über die Bodenaustragsöffnung 14 der Brennkammer abgezogen werden kann.

Bei der Ausbildung nach Fig.2 wurden die Bezugszeichen aus Fig.1 übernommen. Im Innern des Dosierzyklons 1 ist nun zusätzlich ein Wehrrohr 18 ersichtlich, das unabhängig von der Position der Lanze 7 in Richtung des Doppelpfeils 19 relativ zur Lanze 7 und zur Wand des Dosierzyklons 1 verstellt werden kann. Über eine Leitung 20 können dem Wehrrohr weitere Additive zugeführt werden. Mit 21 sind Leitkörper schematisch dargestellt. Der Zyklon mit der Lanze mündet in einen Diffusor 22, welcher selbst wieder in Richtung des Doppelpfeils 23 relativ zum Dosierzyklon 1 höhenverstellbar angeordnet ist. Im Diffusorstein sind entsprechend schräg zur Achse des Diffusors angeordnete Sekundärdüse 24 zur Ausbildung eines Gegendralls angeordnet, wobei mit 25 ein Dichtkompensator angedeutet ist. Der Sekundärdüsenquerschnitt kann hier durch vertikale Verschiebung des Diffusors verändert werden.

Neben der eingangs erwähnten Anwendung eignet sich die erfindungsgemäße Einrichtung beispielsweise auch zur Aufarbeitung von Wolframcarbidschleifstäuben, wobei hier durch Zusatz von Soda als Additiv eine Na₂WO₄-Schmelze gebildet werden kann, welche in einfacher Weise weiter aufbereitet werden kann. Auch kann bei Einsatz von KCl und SiO₂ unter Einsatz von Wasserdampf Alkaliwasserglas mit dem jeweils gewünschten Alkaligehalt hergestellt werden.

## Patentansprüche

1. Einrichtung zum Oxidieren, Reduzieren, Kalzinieren, Sintern oder Schmelzen von Stäuben, wie z.B. Ofen- oder Stahlstäuben, Mergel- und Kalkstaubgemischen, Shredderleichtfraktionen, mineralischen Stäuben wie z.B. Glas-, Zementofen-Bypass-Stäuben, trockenen Kommunalschlämmen, Papierschlämmen oder ölhältigen Schleifstaubsuspensionen mit einem Dosierzyklon, in welchen die Stäube eingetragen werden, an welchen ein tangentialer Anschluss für den Eintrag von Trägergasen mündet, und einer an den Dosierzyklon in axialer Richtung anschließenden Brennkammer, wobei koaxial zur Zyklonaustragsöffnung Brennstoff sowie ggf. weiteres Trägergas in die Brennkammer eingestoßen wird, **dadurch gekennzeichnet, dass** für den Einstoß von flüssigen, in Flüssigkeit gelösten, in Gas suspendierten oder gasförmigen oxidierbaren Substanzen, insbesondere Brennstoffen, eine Lanze koaxial zur Austragsöffnung des Dosierzyklons im Inneren des Dosierzyklons angeordnet ist.

2. Einrichtung nach Anspruch 1, **dadurch gekennzeichnet, dass** die Lanze in axialer Richtung höhenverstellbar ist.

3. Einrichtung nach Anspruch 1 oder 2, **dadurch gekennzeichnet, dass** die Lanze im Bereich der Austragsöffnung des Dosierzyklons eine Düse aufweist.

4. Einrichtung nach Anspruch 1, 2 oder 3, **dadurch gekennzeichnet, dass** die Lanze mit einem Feuerfestmaterial ummantelt oder gekühlt ist.

5. Einrichtung nach einem der Ansprüche 1 bis 4, **dadurch gekennzeichnet, dass** zwischen Dosierzyklon und Brennkammer ein Diffusor angeordnet ist, an welchen Sekundärluftdüsen münden.

6. Einrichtung nach einem der Ansprüche 1 bis 5, **dadurch gekennzeichnet, dass** die höhenverstellbare Lanze von einem in den Dosierzyklon eintauchenden unabhängig von der Lanze höhenverstellbaren Rohr umgeben ist.

7. Einrichtung nach einem der Ansprüche 1 bis 6, **dadurch gekennzeichnet, dass** für die Staubaufgabe wenigstens ein Fallrohr mit Pendelklappen oder eine Zellradschleuse vorgesehen ist.

8. Verfahren zum Oxidieren, Reduzieren, Kalzinieren, Sintern oder Schmelzen von Stäuben mit einer Einrichtung nach einem der Ansprüche 1 bis 7, **dadurch gekennzeichnet, dass** der Dosierzyklon mit einem gegenüber dem Druck in der Lanze geringeren Druck betrieben wird.

9. Verfahren nach Anspruch 8, **dadurch gekennzeichnet, dass** die Stäube als Heißgut aufgegeben werden.

10. Verfahren nach Anspruch 8 oder 9, **dadurch gekennzeichnet, dass** koaxial zur Mündung der Lanze und des Dosierzyklons Sekundärluft mit zur Achse der Lanze geneigter Richtung in die Brennkammer eingeblasen wird.

11. Verfahren nach Anspruch 10, **dadurch gekennzeichnet, dass** die Sekundärluft im Gegendrall zur Drallrichtung des Dosierzyklons eingestoßen wird.

## Claims

1. A device for oxidizing, reducing, calcining, sintering or melting dusts such as, e.g., furnace dusts or steel dusts, marl and lime dust mixtures, shredder light fractions, mineral dusts such as, e.g., glass dusts, cement kiln bypass dusts, dry municipal sludges, paper sludges, or oil-containing grinding dust suspensions, including a dosing cyclone into which the dusts are charged and into which a tangential connection for the injection of carrier gases leads, as well as a combustion chamber connected to the dosing cyclone in the axial direction, wherein fuel and optionally additional carrier gas are injected into the combustion chamber coaxially with the discharge opening of the cyclone, **characterized in that**, for the injection of liquid substances, substances dissolved in liquids, substances suspended in gases, or gaseous, oxidizable substances, in particular fuels, a lance is arranged in the interior of the dosing cyclone coaxially with the discharge opening of the dosing cylone.

2. A device according to claim 1, **characterized in that** the lance is vertically adjustable in the axial direction.

3. A device according to claim 1 or 2, **characterized in that** the lance comprises a nozzle in the region of the discharge opening of the dosing cyclone.

4. A device according to claim 1, 2 or 3, **characterized in that** the lance is coated with a refractory material, or cooled.

5. A device according to any one of claims 1 to 4, **characterized in that** a diffusor into which secondary air nozzles lead is arranged between the dosing cyclone and the combustion chamber.

6. A device according to any one of claims 1 to 5, **characterized in that** the vertically adjustable lance is surrounded by a tube extending into the dosing cyclone and vertically adjustable independently of the lance.

7. A device according to any one of claims 1 to 6, **characterized in that** at least one downspout including shuttle valves, or a cellular wheel sluice, is provided for the charging of dust.

8. A method for oxidizing, reducing, calcining, sintering or melting dusts using a device according to any one of claims 1 to 7, **characterized in that** the dosing cyclone is operated at a pressure reduced relative to the pressure in the lance.

9. A method according to claim 8, **characterized in that** the dusts are charged as hot material.

10. A method according to claim 8 or 9, **characterized in that** secondary air is blown into the combustion chamber coaxially with the mouth of the lance and the dosing cyclone, in a direction inclined relative to the axis of the lance.

11. A method according to claim 10, **characterized in that** the secondary air is injected in counter-twist to the twist direction of the dosing cyclone.

## Revendications

1. Dispositif pour réaliser l'oxydation, la réduction, la calcination, le frittage ou la fusion de poussières, comme par exemple des poussières de four ou des poussières d'acier, des mélanges de poussières de marne et de chaux, des fractions légères de déchiqueteur, des poussières minérales, comme par exemple des poussières de verre, des poussières de bypass de four à ciment, des boues d'égout sèches, de la pulpe de papier ou des suspensions de poussière de meulage à teneur en huile, comprenant un cyclone doseur, dans lequel les poussières sont introduites et sur lequel débouche un raccord tangentiel pour l'introduction de gaz porteurs, et une chambre de combustion se raccordant, en direction axiale, au cyclone doseur, du combustible ainsi que, le cas échéant, du gaz porteur supplémentaire, étant injectés dans la chambre de combustion, coaxialement à l'ouverture d'évacuation du cyclone, **caractérisé en ce que**, pour l'injection de substances oxydables, liquides, dissoutes dans un liquide, en suspension dans un gaz ou gazeuses, en particulier de combustibles, une lance est disposée à l'intérieur du cyclone doseur, coaxialement à l'ouverture d'évacuation du cyclone doseur.

2. Dispositif selon la revendication 1, **caractérisé en ce que** la lance est réglable en hauteur, en direction axiale.

3. Dispositif selon la revendication 1 ou 2, **caractérisé en ce que** la lance présente une buse dans la zone de l'ouverture d'évacuation du cyclone doseur.

4. Dispositif selon la revendication 1, 2 ou 3, **caractérisé en ce que** la lance est enveloppée avec un matériau réfractaire ou refroidie.

5. Dispositif selon l'une des revendications 1 à 4, **caractérisé en ce qu'**entre le cyclone doseur et la chambre de combustion est disposé un diffuseur, sur lequel débouchent des buses d'air secondaire.

6. Dispositif selon l'une des revendications 1 à 5, **caractérisé en ce que** la lance réglable en hauteur, est entourée d'un tube plongeant dans le cyclone doseur et réglable en hauteur indépendamment de la lance.

7. Dispositif selon l'une des revendications 1 à 6, **caractérisé en ce que** pour le chargement de la poussière, il est prévu au moins un tuyau de descente, muni de vannes à clapet oscillant, ou un sas à roue alvéolaire.

8. Procédé pour réaliser l'oxydation, la réduction, la calcination, le frittage ou la fusion de poussières, avec un dispositif selon l'une des revendications 1 à 7, **caractérisé en ce que** le cyclone doseur est exploité avec une pression plus faible que la pression dans la lance.

9. Procédé selon la revendication 8, **caractérisé en ce que** les poussières sont chargées à l'état de matériau très chaud.

10. Procédé selon la revendication 8 ou 9, **caractérisé en ce que**, coaxialement à l'embouchure de la lance et du cyclone doseur, de l'air secondaire est insufflé dans la chambre de combustion sous une direction inclinée par rapport à l'axe de la lance.

11. Procédé selon la revendication 10, **caractérisé en ce que** l'air secondaire est injecté suivant une rotation opposée au sens de mise en rotation du cyclone doseur.
